(19) Europäisches Patentamt
European Patent Office
Office européen des brevets

(11) **EP 2 704 424 A1**

(12) **EUROPEAN PATENT APPLICATION**

(43) Date of publication:
**05.03.2014 Bulletin 2014/10**

(51) Int Cl.:
***H04N 5/235*** (2006.01)  ***H04N 1/21*** (2006.01)
***H04N 1/387*** (2006.01)

(21) Application number: **13170347.2**

(22) Date of filing: **04.06.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **27.08.2012 KR 20120093891**

(71) Applicant: **Samsung Electronics Co., Ltd
Gyeonggi-do 443-742 (KR)**

(72) Inventors:
• **Lee, Seok-goun
Gyeonggi-do (KR)**

• **Son, Sang-ryoon
Gyeonggi-do (KR)**
• **Ahn, Seon-ju
Gyeonggi-do (KR)**
• **Park, Su-jung
Jeollabuk-do (KR)**
• **Kim, Hyon-soo
Gyeonggi-do (KR)**
• **Yoo, Kyung-soo
Gyeonggi-do (KR)**

(74) Representative: **Bray, Richard Anthony
Appleyard Lees
15 Clare Road
Halifax HX1 2HY (GB)**

(54) **Photographing apparatus, method of controlling the same, and computer-readable recording medium**

(57)     A method of controlling a photographing apparatus is provided that includes: setting a first exposure time according to a users input (S602); determining a number of times photographing is to be performed according to an illuminance and the first exposure time (S604); continuously capturing a plurality of still images for the number of times photographing is determined to be performed (S606); and generating a resultant image corresponding to the first exposure time by combining the captured plurality of still images (S608).

FIG. 6

EP 2 704 424 A1

**Description**

CROSS-REFERENCE TO RELATED PATENT APPLICATION

This application claims the benefit of Korean Patent Application No. 10-2012-0093891, filed on August 27, 2012, in the Korean Intellectual Property Office, the disclosure of which is incorporated herein in its entirety by reference.

BACKGROUND

Field

Disclosed herein is a photographing apparatus, a method of controlling the same, and a computer-readable recording medium having embodied thereon computer program code or codes for executing the method.

Description of the Related Art

A photographing apparatus captures an image by applying incident light passing through a lens, an iris, and so on, to an imaging device and performing photoelectric transformation. In this case, to make sure that the image is bright enough and to not cause saturation due to a high brightness value in the image, an iris value and an exposure time of the imaging device may be determined. A user may adjust brightness, depth, atmosphere, vividness, etc., of an image by adjusting an iris value and an exposure time. However, since there is a limit to a range of a photographing setting values for a user to determine, it is difficult for the user to capture a desired image.

SUMMARY

According to the present invention there is provided an apparatus and method as set forth in the appended claims. Other features of the invention will be apparent from the dependent claims, and the description which follows.
Various example embodiments of the invention may allow a user to easily capture a long exposure image, and may allow even a relatively low specification photographing apparatus to capture a long exposure image.
According to an example embodiment of the invention, there is provided a method of controlling a photographing apparatus, the method including: setting a first exposure time according to a user's input; determining a number of times photographing is performed (or to be performed) according to an illuminance and the first exposure time; continuously capturing a plurality of still images for the number of times photographing is performed (or determined to be performed); and generating a resultant image corresponding to the first exposure time by combining the captured plurality of still images.
Each of the plurality of still images may be captured for a second exposure time that is less than the first exposure time, and/or the number of times photographing is performed is determined according to the illuminance and an iris (i.e. aperture) value.
The method may further include reducing brightness values of pixels of the plurality of still images to obtain reduced brightness values. The generating of the resultant image may include combining the plurality of still images by summing the reduced brightness values.
The method may further include detecting a movement of the photographing apparatus. The continuous capturing of the plurality of still images may be performed only when there is no movement of the photographing apparatus and/or when the movement is less than a reference value. If greater than this reference value, one or more images captured may be too blurry to be of use, or a combined image may not be as desired.
The generating of the resultant image may include generating the resultant image by generating a combined image whenever each of the plurality of still images is input.
The method may further include reducing brightness values of pixels of the plurality of still images to obtain reduced brightness values. The generating of the resultant image may include combining the plurality of still images having the reduced brightness values. The reducing of the brightness values may include reducing the brightness values of the pixels of the plurality of still images such that contributions of the plurality of still images are the same and/or such that brightness values of pixels of the resultant image are not saturated.
The generating of the resultant image may include generating the combined image by calculating a brightness value $Y_n(x, y)$ of each pixel of the combined image according to the following equation when an input still image is an $n^{th}$ still image (where $2 \leq n \leq$ number of times photographing is performed, n is a natural integer number),

$$Y_n(x, y) = \frac{(n-1)}{n} \times Y_{n-1}(x, y) + \frac{1}{n} \times I_n(x, y)$$

where $Y_n(x, y)$ is a brightness value of each pixel with (x, y) coordinates of a combined image obtained by combining images from a first still image to an $n$th still image, $Y_{n-1}(x, y)$ is a brightness value of each pixel with (x, y) coordinates of a combined image obtained by combining images from the first still image to an n-1th still image, and $I_n(x, y)$ is a brightness value of each pixel with (x, y) coordinates of the $n$th still image.

According to another example embodiment of the invention, there is provided a photographing apparatus including: a photographing unit that generates an image by performing photoelectric transformation on incident light; an exposure time setting unit that sets a first exposure time according to a user's input; a photographing control unit that determines a number of times photographing is performed (or to be performed) according to an illuminance and the first exposure time, and controls the photographing unit to continuously capture a plurality of still images for the number of times photographing is performed (or determined to be performed); and an image combining unit that generates a resultant image corresponding to the first exposure time by combining the captured plurality of still images.

Each of the plurality of still images may be captured for a second exposure time that is less than the first exposure time, and/or the number of times photographing is performed is determined according to the illuminance and an iris value.

The image combining unit may combine the plurality of still images by reducing brightness values of pixels of the plurality of still images to obtain reduced brightness values and summing the reduced brightness values.

The photographing apparatus may further include a movement detecting unit that detects a movement of the photographing apparatus. The photographing control unit may continuously capture the plurality of still images only when there is no movement of the photographing apparatus and/or when the movement is less than a reference value.

The image combining unit may generate the resultant image by generating a combined image whenever each of the plurality of still images is input.

The image combining unit may reduce brightness values of pixels of the plurality of still images to obtain reduced brightness values. The image combining unit may combine the plurality of still images having reduced brightness values. The image combining unit may reduce the brightness values such that contributions of the plurality of still images in the resultant image are the same and/or such that pixel values of pixels of the resultant image are not saturated.

The image combining unit may generate the combined image by calculating a brightness value of each pixel of the combined image according to the following equation when an input still image is an $n$th still image (where $2 \leq n \leq$ number of times photographing is performed, and n is a natural number),

$$Y_n(x, y) = \frac{(n-1)}{n} \times Y_{n-1}(x, y) + \frac{1}{n} \times I_n(x, y)$$

where $Y_n(x, y)$ is a brightness value of each pixel with (x, y) coordinates of a combined image obtained by combining images from a first still image to an $n$th still image, $Y_{n-1}(x, y)$ is a brightness value of each pixel with (x, y) coordinates of a combined image obtained by combining images from the first still image to an n-1th still image, and $I_n(x, y)$ is a brightness value of each pixel with (x, y) coordinates of the $n$th still image.

According to another example embodiment of the invention, there is provided a non-transitory computer-readable recording medium having embodied thereon computer program code or codes for executing a method of controlling a photographing apparatus when being read and performed, the method including: setting a first exposure time according to a user's input; determining a number of times photographing is performed (or to be performed) according to an illuminance and the first exposure time; continuously capturing a plurality of still images for the number of times photographing is performed (or determined to be performed); and generating a resultant image corresponding to the first exposure time by combining the captured plurality of still images.

It will be appreciated that one or more features of one example embodiment may, where appropriate (e.g. where not mutually exclusive, or where not incompatible) be combined with and/or replace one or more features of another example embodiment.

BRIEF DESCRIPTION OF THE DRAWINGS

For a better understanding of the invention, and to show how example embodiments of the same may be carried into effect, reference will now be made, by way of example, to the accompanying diagrammatic Figures in which:

FIG. 1 is a block diagram illustrating a photographing apparatus according to an example embodiment of the invention;
FIG. 2 is a block diagram illustrating a central processing unit/digital signal processor (CPU/DSP) and a photographing unit according to an example embodiment of the invention;
FIG. 3 is a timing and block diagram for explaining a process of capturing a plurality of still images, according to an example embodiment of the invention;
FIG. 4 is a pictorial view illustrating a plurality of still images and a resultant image according to an example embodiment of the invention;
FIG. 5 is a pictorial view illustrating resultant images according to an example embodiment of the invention;
FIG. 6 is a flowchart illustrating a method of controlling the photographing apparatus, according to an example embodiment of the invention;
FIG. 7 is a flowchart illustrating a method of controlling the photographing apparatus, according to another example embodiment of the invention;
FIG. 8 is a block diagram illustrating a CPU/DSP and the photographing unit according to another example embodiment of the invention;
FIG. 9 is a flowchart illustrating a method of controlling a photographing apparatus, according to another example embodiment of the invention; and
FIG. 10 is a pictorial view illustrating a user interface screen according to an example embodiment of the invention.

DETAILED DESCRIPTION

As used herein, the term "and/or" includes any and all combinations of one or more of the associated listed items.
The following description and the attached drawings are provided for better understanding of the invention, and descriptions of techniques or structures related to the invention which would be obvious to one of ordinary skill in the art will be omitted.
Various example embodiments of the invention will now be described more fully with reference to the accompanying drawings, in which exemplary embodiments of the invention are shown. The invention may be embodied in many different forms and should not be construed as being limited to the example embodiments set forth herein; rather, these example embodiments are provided so that this disclosure will be thorough and complete, and will fully convey the concept of the invention to those of ordinary skill in the art.

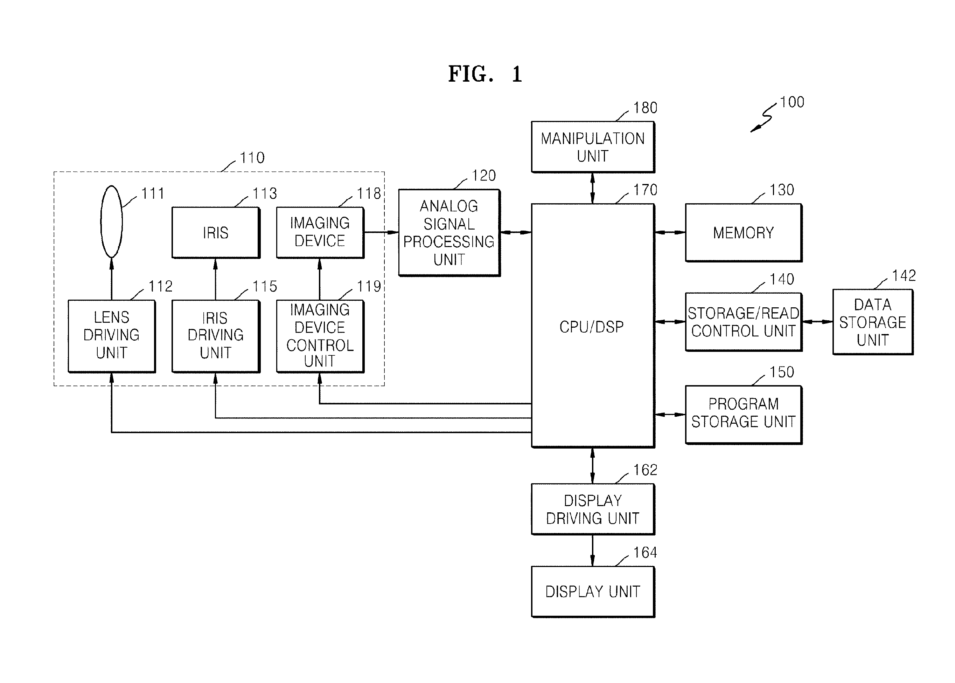

FIG. 1 is a block diagram illustrating a photographing apparatus 100 according to an example embodiment of the invention.
The photographing apparatus 100 may include a photographing unit 110, an analog signal processing unit 120, a memory 130, a storage/read control unit 140, a data storage unit 142, a program storage unit 150, a display driving unit 162, a display unit 164, a central processing unit/digital signal processor (CPU/DSP) 170, and a manipulation unit 180.
An overall operation of the photographing apparatus 100 is controlled by the CPU/DSP 170. The CPU/DSP 170 applies control signals to a lens driving unit 112, an iris (i.e. aperture) driving unit 115, and an imaging device control unit 119.
The photographing unit 110, which is an element for generating an image of an electrical signal from incident light, includes a lens 111, the lens driving unit 112, an iris 113 (i.e. an aperture), the iris driving unit 115, an imaging device 118, and the imaging device control unit 119.
The lens 111 may include a plurality of groups of lenses or a plurality of lenses. A position of one or more elements of the lens 111 is adjusted by the lens driving unit 112. The lens driving unit 112 adjusts a position of the lens 111 according to a control signal applied by the CPU/DSP 170.
An extent to which the iris 113 is opened/closed is adjusted by the iris driving unit 115, and the iris 113 adjusts the amount of light incident on the imaging device 118. This may also allow for a control of a depth of focus of an image that is obtained.
An optical signal passing through the lens 111 and the iris 113 reaches a light-receiving surface of the imaging device 118 to form an image of a subject. The imaging device 118 may be a charge-coupled device (CCD) image sensor, or a complementary metal-oxide semiconductor image sensor (CIS), which converts the optical signal into an electrical signal, or any other similar imaging device. A sensitivity of the imaging device 118 may be adjusted by the imaging device control unit 119. The imaging device control unit 119 may control the imaging device 118 according to a control signal automatically generated by an image signal input in real time, or a control signal manually input by a user's manipulation.

An exposure time of the imaging device 118 is adjusted by a shutter (not shown). The shutter may be a mechanical shutter that adjusts incidence of light by moving the iris 113 or an electronic shutter that adjusts exposure by applying an electrical signal to the imaging device 118. For example, the signal may control the time over which an image is obtained by controlling an output timing from the imaging device 118, or a timing when an image is to be read or obtained from the imaging device 118, or a time over which the imaging device 118 is sensitive to light.

The analog signal processing unit 120 performs one or more of noise reduction, gain adjustment, waveform shaping, analog-to-digital conversion, etc., on an analog signal applied from the imaging device 118.

The analog signal processed by the analog signal processing unit 120 may be input to the CPU/DSP 170 through the memory 130, or may be directly input to the CPU/DSP 170 without passing through the memory 130. The memory 130 functions as a main memory of the photographing apparatus 100 and may permanently or, more likely, temporarily store necessary information during an operation of the CPU/DSP 170. The program storage unit 150 stores programs including an operation system, an application system, and so on for driving the digital photographing apparatus 100.

In addition, the photographing apparatus 100 includes the display unit 164 that displays information about an image obtained by the photographing apparatus 100 or an operating state of the photographing apparatus 100. The display unit 164 may provide visual information and/or acoustic information to the user. In order to provide the visual information, the display unit 164 may include, for example, a liquid crystal display (LCD) panel or an organic light-emitting display panel. Alternatively and/or additionally, the display unit 164 may be a touchscreen that may recognize a touch input from a user.

The display driving unit 162 applies a driving signal to the display unit 164.

The CPU/DSP 170 processes an image signal input thereto, and controls each element according to the image signal or an external input signal. The CPU/DSP 170 may perform image signal processing such as one or more of noise reduction, gamma correction, color filter array interpolation, color matrix, color correction, or color enhancement on input image data to improve image quality. Also, the CPU/DSP 170 may generate an image file by processing and/or compressing image data generated by performing the image signal processing for improving image quality, or may restore image data from the image file. An image compression format may be reversible or irreversible. In the case of a still image, examples of the image compression format may include a joint photographic experts group (JPEG) format and a JPEG 2000 format. Also, in the case where a moving picture is recorded, a moving picture file may be generated by compressing a plurality of frames according to the moving picture experts group (MPEG) standard. The image file may be generated according to, for example, the exchangeable image file format (Exif) standard.

The image data output from the CPU/DSP 170 is input to the storage/read control unit 140 directly or through the memory 130, and the storage/read control unit 140 stores the image data in the data storage unit 142 automatically or according to a signal from the user. Also, the storage/read control unit 140 may read data about an image from an image file stored in the data storage unit 142, and may input the data to the display driving unit 162 through the memory 130 or another path to display the image on the display unit 164. The data storage unit 142 may be detachably attached to the photographing apparatus 100 or may be permanently attached to the photographing apparatus 100.

Also, the CPU/DSP 170 may perform one or more of color processing, blur processing, edge emphasis, image analysis, image recognition, image effect processing, and so on. Examples of the image recognition may include face recognition and/or scene recognition. In addition, the CPU/DSP 170 may perform display image signal processing for displaying the image on the display unit 164. For example, the CPU/DSP 170 may perform one or more of brightness level adjustment, color correction, contrast adjustment, contour emphasis, screen splitting, character image generation, and image synthesis. The CPU/DSP 170 may be connected or connectable to an external monitor, and/or may perform predetermined image signal processing to display the image on the external monitor, and/or may transmit processed image data to display a corresponding image on the external monitor.

Also, the CPU/DSP 170 may generate a control signal for controlling one or more of auto-focusing, zoom change, focus change, auto-exposure correction, and so on by executing a program stored in the program storage unit 130 or by including a separate module, and/or may provide the control signal to one or more of the iris driving unit 115, the lens driving unit 112, and the imaging device control unit 119 to control operations of elements included in the photographing apparatus 100 such as a shutter and a strobe (not shown).

The manipulation unit 180 is an element through which the user may input a control signal. The manipulation unit 180 may include one or more various functional buttons or other input arrangements such as a shutter-release button for inputting a shutter-release signal by exposing the imaging device 118 to light for a predetermined period of time to take a photograph, a power button for inputting a control signal to control power on/off, a zoom button for widening or narrowing a viewing angle according to an input, a mode selection button, and a photographing setting value adjustment button. The manipulation unit 180 may be embodied as any of various forms that allow the user to input a control signal such as buttons, a keyboard, a touch pad, a touchscreen, and a remote controller.

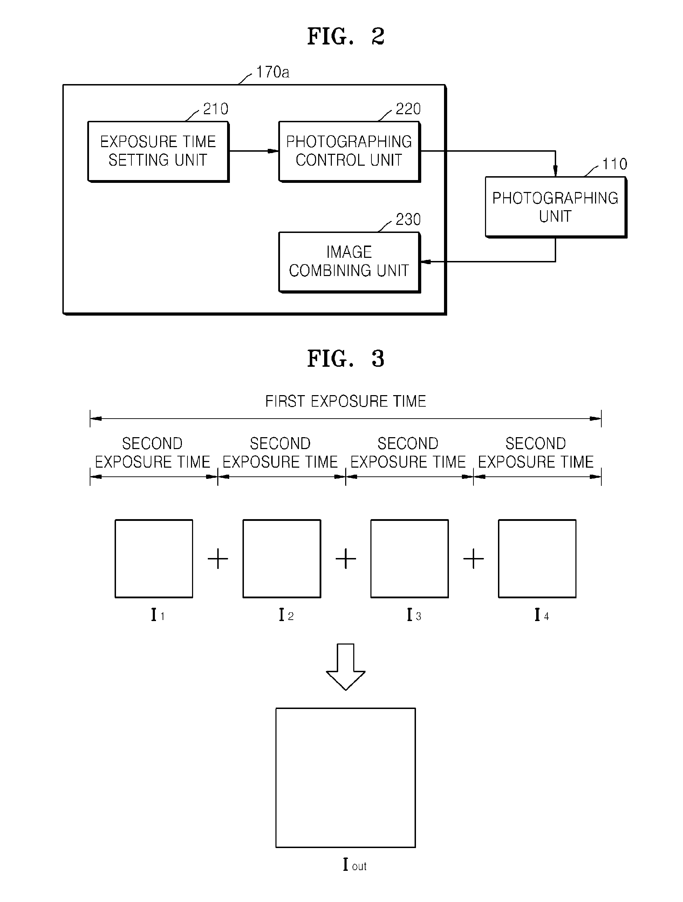

FIG. 2 is a block diagram illustrating a CPU/DSP 170a and the photographing unit 110 according to an example embodiment of the invention.

Referring to FIG. 2, the CPU/DSP 170a includes an exposure time setting unit 210, a photographing control unit 220, and an image combining unit 230.

The exposure time setting unit 210 sets a first exposure time that is a total exposure time of a resultant image according to the user's input. In the present example embodiment, the user may set the first exposure time that is greater than an otherwise allowed nominal maximum exposure time allowed by the photographing apparatus 100. In the present example embodiment, the user may photograph a subject, for example, a waterfall, a fountain, bubbles, a firework, a night scene, or stars, for an exposure time greater than an exposure time ordinarily allowed by the photographing apparatus 100 to show all tracks (that is, continuous or step-wise movement of that time) of the subject. For example, even when a nominal maximum exposure time allowed by the photographing apparatus 100 is 1 second, the user may set the first exposure time to 5 seconds. The user may set the first exposure time in various ways. For example, the user may directly set the first exposure time or indirectly set the first exposure time to be long, medium, and short. Also, the user may give an input through the manipulation unit 180.

In the present example embodiment, long exposure photographing may be performed in a specific mode that may be set by the photographing apparatus 100. When the photographing apparatus 100 is set to a specific mode, the exposure time setting unit 210 may provide a user interface through which the user may set the first exposure time.

The photographing control unit 220 determines a number of times photographing is performed according to an illuminance and the first exposure time. Also, the photographing control unit 220 controls the photographing unit 110 to continuously capture a plurality of still images, and the determined number of times photographing is performed.

FIG. 3 is a diagram for explaining a process of capturing a plurality of still images, according to an example embodiment of the invention.

The first exposure time is set by the exposure time setting unit 210 according to the user's input as described above. The photographing control unit 220 controls the photographing unit 110 to continuously capture a plurality of still images in order to generate a resultant image corresponding to the first exposure time. To this end, the photographing control unit 220 determines a number of times photographing is performed or is to be performed for the first exposure time. For example, the photographing control unit 220 may determine a range of an exposure time needed to capture each still image according to the illuminance and may determine a number of times photographing is performed or is to be performed according to the determined range of the exposure time. A second exposure time for which each still image is exposed may be determined by dividing the first exposure time by the number of times photographing is, or is to be, performed.

In the present example embodiment, the number of times photographing is performed is determined according to the illuminance and the first exposure time. A range of an exposure time needed to capture each image according to the illuminance may be determined and the number of times photographing is to be performed may be determined. Also, the number of times photographing is to be performed may be determined in consideration of both the illuminance and an iris value.

Once the number of times photographing is to be performed and the second exposure time are determined, the photographing control unit 220 controls the photographing unit 110 to continuously capture the plurality of still images, and the number of times photographing is performed. The plurality of still images may be captured in various ways. For example, the plurality of still images may be captured in response to a shutter-release signal, may be captured when there is no movement of the photographing apparatus 100, or may be captured with a timer.

Also, the photographing control unit 220 may control an operation of capturing the plurality of still images according to a type of a shutter included in the photographing unit 110. For example, when the shutter is a mechanical shutter that blocks incident light by moving a blade, the photographing control unit 220 controls the photographing unit 110 to capture the plurality of still images at time intervals according to a movement of the shutter and reads out the captured images. Alternatively, when the shutter is an electronic shutter such as a rolling shutter which controls an exposure time by using an electronic film, the photographing control unit 220 may control the electronic film to continuously capture the plurality of still images.

The photographing unit 110 continuously captures the plurality of still images, and the number of times photographing is performed for the second exposure time under the control of the photographing control unit 220. Also, the photographing unit 110 applies the captured plurality of still images to the image combining unit 230.

The image combining unit 230 generates a resultant image corresponding to the first exposure time by combining the plurality of still images. Referring to FIG. 3, when a still image is continuously captured 4 times in order to capture a resultant image $I_{out}$ corresponding to the first exposure time, a plurality of still images $I_1$, $I_2$, $I_3$, and $I_4$ are generated by the photographing unit 110. The image combining unit 230 generates the resultant image $I_{out}$ by combining the plurality of still images $I_1$, $I_2$, $I_3$, and $I_4$. In the present example embodiment, the resultant image $I_{out}$ may be an image generated by summing brightness values of pixels of the plurality of still images $I_1$, $I_2$, $I_3$, and $I_4$ through linear combination.

When the brightness values of the pixels of the plurality of still images I1, I2, I3, and I4 are summed up, saturation may occur due to high brightness values of pixels of the resultant image Iout thereby not displaying the subject as desired, or at all, or reducing contrast. In the present example embodiment, however, when the brightness values of the pixels of the plurality of still images I1, I2, I3, and I4 are summed through linear combination, in order not to saturate the brightness values of the pixels of the resultant image $I_{out}$, linear combination may be performed by adjusting weights applied to the brightness values of the pixels of the plurality of still images $I_1$, $I_2$, $I_3$, and $I_4$. For example, when the number of times photographing is performed is 4, the resultant image $I_{out}$ may be generated by multiplying the brightness values of the pixels of the still images $I_1$, $I_2$, $I_3$, and $I_4$ by 1/4 to obtain reduced brightness values and summing the reduced brightness values.

In the present example embodiment, when a mechanical shutter is used, the image combining unit 230 may combine the plurality of still images by correcting for a global motion generated due to the mechanical shutter.

In the present example embodiment, the user may obtain a resultant image having an exposure time greater than a nominal maximum exposure time which the user may set. Also, even when long exposure photographing is performed by mounting a filter or the like on a lens barrel, the maximum exposure time which the user may set has a limitation and an additional accessory is needed. In the present example embodiment, however, long exposure photographing may be performed without mounting an additional accessory. Also, in the present example embodiment, even when the user is inexperienced in manipulating the photographing apparatus 100, the user may easily perform long exposure photographing.

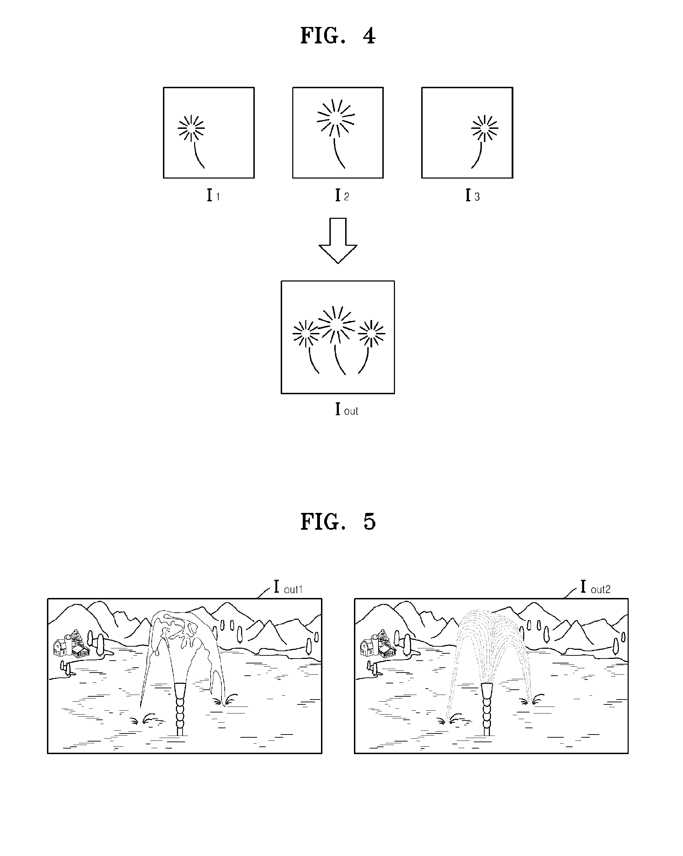

FIG. 4 is a view illustrating a resultant image of a firework $I_{out}$ and a plurality of still images $I_1$, $I_2$, and $I_3$, according to an example embodiment of the invention. In the present example embodiment, the resultant image $I_{out}$ which is a long exposure image may be generated by continuously photographing a firework to obtain the plurality of still images $I_1$, $I_2$, and $I_3$.

FIG. 5 is a view illustrating resultant images $I_{out1}$ and $I_{out2}$ according to an example embodiment of the invention. The user may adjust effects of the resultant images $I_{out1}$ and $I_{out2}$ by adjusting the first exposure time. For example, the resultant image $I_{out2}$ of FIG. 5 is obtained by setting the first exposure time to be greater than that of the resultant image $I_{out1}$. As shown in FIG. 5, effects of tracks along which objects move vary according to the first exposure time.

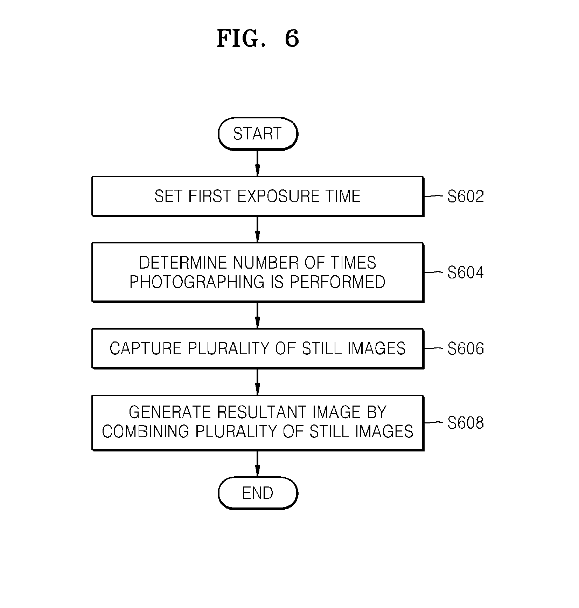

FIG. 6 is a flowchart illustrating a method of controlling the photographing apparatus 100, according to an example embodiment of the invention.

Referring to FIG. 6, in operation S602, a first exposure time is set according to the user's input. In FIG. 6, the first exposure time may be set only when the photographing apparatus is set to a specific mode.

In operation S604, a number of times photographing is to be performed to obtain a plurality of still images is determined according to an illuminance. In FIG. 6, the number of times photographing is to be performed may be set in consideration of the illuminance and an iris value. Also, a second exposure time applied to each of the plurality of still images is determined according to the number of times photographing is to be performed.

Next, in operation S606, the plurality of still images are continuously captured, and the number of times photographing is performed. Each of the plurality of still images is captured for the second exposure time.

In operation S608, a resultant image corresponding to the first exposure time is generated by combining the plurality of still images. The resultant image may be generated by summing brightness values of pixels of the plurality of still images through linear combination. In this case, the brightness values of the pixels of the plurality of still images may be linearly combined so as not to saturate brightness values of pixels of the resultant image.

Alternatively, whenever a still image is input from the photographing unit 110, the image combining unit 230 may combine a current stored combined image with the input still image. In the present example embodiment, since only one combined image and one still image are temporarily stored in the memory 130 without temporarily or permanently storing all of the plurality of still images, a space of the memory 130 may be saved. Also, even the photographing apparatus 100 having a limited space of the memory 130 may capture a long exposure image.

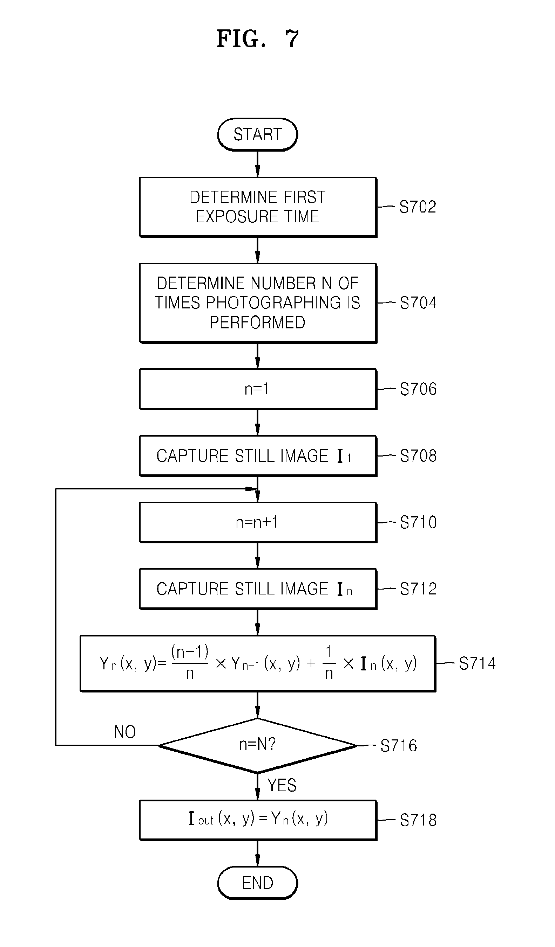

FIG. 7 is a flowchart illustrating a method of controlling the photographing apparatus 100, according to another example embodiment of the invention.

In operation S702, a first exposure time is determined according to the user's input. In operation S704, a number of times N photographing is to be performed to obtain continuously captured still images is determined according to an illuminance and the first exposure time. Next, in operation S706, a variable n indicating a current number of times photographing is performed is set to 1. In operation S708, a first still image $I_1$ is captured. In operation S710, the variable n is increased by 1. In operation S712, a second still image $I_2$ is captured. In operation S714, a combined image $Y_n$ is generated according to Equation 1.

$$Y_n(x, y) = \frac{(n-1)}{n} \times Y_{n-1}(x, y) + \frac{1}{n} \times I_n(x, y) \quad \ldots (1),$$

where $Y_n(x, y)$ indicates a brightness value of each pixel of the combined image $Y_n$, $Y_{n-1}(x, y)$ indicates a brightness value of each pixel of a currently stored combined image obtained by combining still images from the first still image $I_1$ to an $n-1^{th}$ still image $I_n$, and $I_n(x, y)$ indicates a brightness value of each pixel of a still image input from the photographing unit 110.

In operation S716, it is determined whether the variable n is equal to the number of times N photographing is to be performed. Operations S710, S712, and S714 are repeatedly performed until an $N^{th}$ input image $I_N$ is input and a combined image $Y_N$ is generated. In operation S718, when the $N^{th}$ input image $I_N$ is input and the combined image $Y_N$ is generated, a resultant image $I_{out}$ may be obtained.

For example, when a total number of times N photographing is to be performed is 4, a resultant image $I_{out}$ is generated as shown by Equation 2.

$$Y_2(x, y) = \frac{1}{2} \times I_1(x, y) + \frac{1}{2} \times I_2(x, y) \; ,$$

$$Y_3(x, y) = \frac{2}{3} \times Y_2(x, y) + \frac{1}{3} \times I_3(x, y) \; ,$$

$$Y_4(x, y) = \frac{3}{4} \times Y_3(x, y) + \frac{1}{4} \times I_4(x, y) \; , \text{ and}$$

$$I_{out}(x, y) = Y_4(x, y) \qquad \dots (2).$$

In the present example embodiment, a combined image may be generated whenever a still image is input, and contributions of a plurality of still images in a resultant image may be the same. The earlier an image is captured and input, the more image combination processes the image undergoes. In the present example embodiment, contributions of a plurality of still images in a resultant image may be the same by making a weight applied to an existing combined image greater than or equal to a weight applied to an input still image.

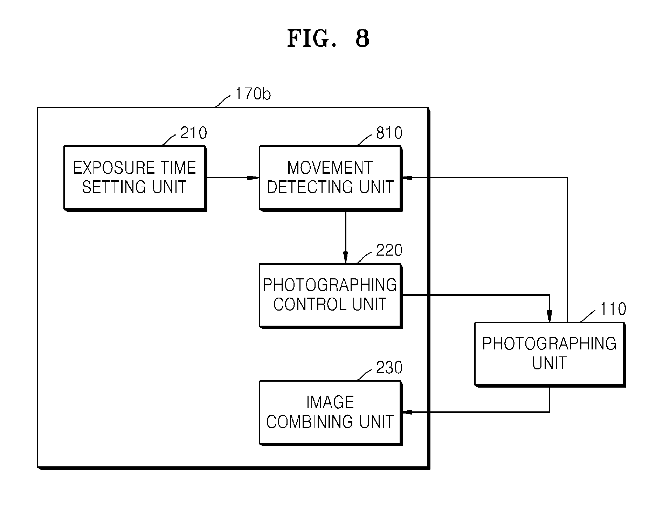

FIG. 8 is a block diagram illustrating a CPU/DSP 170b and the photographing unit 110 according to another example embodiment of the invention. Referring to FIG. 8, the CPU/DSP 170b may include the exposure time setting unit 210, the photographing control unit 220, the image combining unit 230, and a movement detecting unit 810.

In the present example embodiment, only when there is no movement of the photographing apparatus 100, or a movement is less than a reference value, may long exposure photographing be performed. Long exposure photographing may be effectively performed when there is no movement of the photographing apparatus 100 and only a specific subject moves. Accordingly, when there is a movement of the photographing apparatus 100, it is difficult to obtain a long exposure image having a desired effect. In the present example embodiment, since a plurality of still images are captured only when there is no movement of the photographing apparatus 100 or a movement is less than a reference value, a resultant image desired by the user may be obtained.

In the present example embodiment, the movement detecting unit 810 detects whether there is a movement of the photographing apparatus 100.

For example, the movement detecting unit 810 may be embodied as a sensor (e.g., a gyro sensor) that directly detects a movement of the photographing apparatus 100. In this case, the movement detecting unit 810 may be disposed outside the CPU/DSP 170b, unlike in FIG. 8.

Alternatively, the movement detecting unit 810 may detect a movement of the photographing apparatus 100 from an image input from the photographing unit 110. The image input from the photographing unit 110 may be, for example, a live-view image.

In the present example embodiment, the photographing control unit 220 may continuously capture a plurality of still images only when the movement detecting unit 810 determines that there is no movement of the photographing apparatus 100, or a movement is less than a reference value.

For example, when it is determined that there is no movement, or a movement is less than a reference value, the photographing apparatus 100 may enter a specific mode, or be allowed to enter a specific mode, in which long exposure photographing is allowable and/or is performed.

Alternatively, the photographing control unit 220 may continuously capture, or be allowed to continuously capture, a plurality of still images only when it is determined that there is no movement or a movement is less than a reference value. In this case, even when a shutter-release signal is input, if a movement is equal to or greater than a predetermined value, the photographing control unit 220 may not capture a plurality of still images. For example, the photographing control unit 220 may automatically capture a plurality of still images when a movement is equal to or less than a predetermined value.

In the present example embodiment, the image combining unit 230 may combine a plurality of still images by correcting a global motion due to a movement generated in the plurality of still images according to movement information obtained by the movement detecting unit 810. This may allow images to be combined such that the only movement shown in the resultant image is absolute movement of the subject, rather than movement of the photographing apparatus relative to the subject.

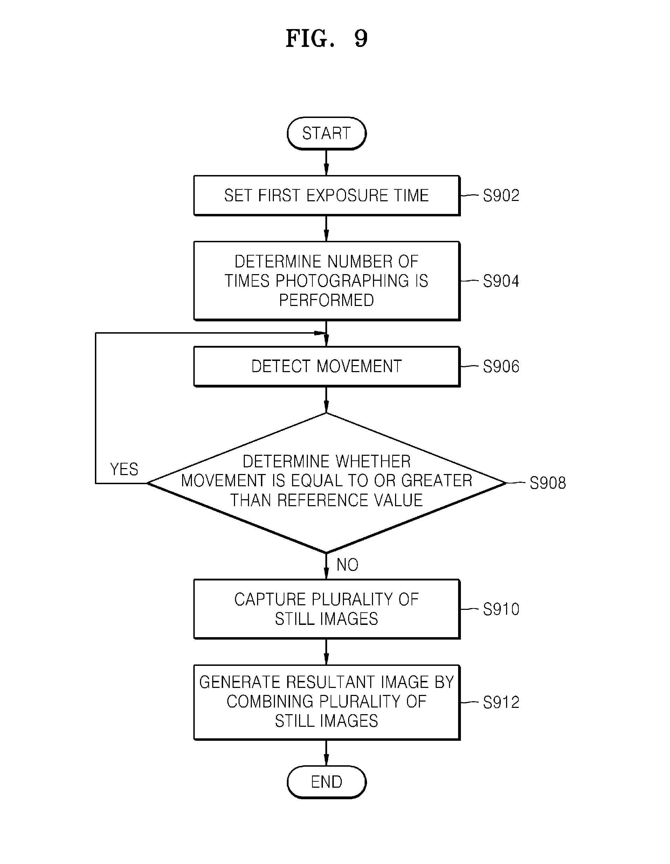

FIG. 9 is a flowchart illustrating a method of controlling the photographing apparatus 100, according to another example embodiment of the invention.

Referring to FIG. 9, in operation S902, a first exposure time is determined. In operation S904, a number of times photographing is to be performed is determined according to an illuminance and the first exposure time.

In operation S906, a movement of the photographing apparatus 100 is detected. In operation S908, it is determined whether the movement is equal to or greater than a reference value. In the present example embodiment, determination may be performed in various ways. For example, it may be determined whether there is a movement or a movement is equal to or less than a reference value.

When it is determined in operation S908 that the movement is equal to or greater than the reference value, the plurality of still images are not captured. When it is determined in operation S908 that the movement is less than the reference value, the method proceeds to operation S910. In operation S910, the plurality of still images are captured for a second exposure time for the determined number of times photographing is determined to be performed. Next, in operation S912, a resultant image corresponding to the first exposure time is generated by combining the plurality of still images.

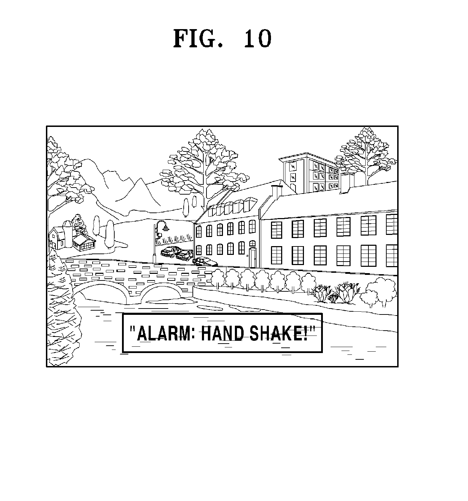

FIG. 10 is a view illustrating a user interface screen according to an example embodiment of the invention.

Referring to FIG. 10, when a movement is equal to or greater than a predetermined value, the movement detecting unit 810 or the photographing control unit 220 may output to the user an alarm message through the display unit 164, a warning light, or a sound. For example, the movement detecting unit 810 or the photographing control unit 220 may display an alarm message on the user interface screen as shown in FIG. 10.

In another embodiment, however, it may be desirable for the user to be able to move the photographing apparatus relative to the subject, for example to introduce a degree of movement in the captured image that would not be present if the photographing apparatus was kept relatively still. One or more movement detection modes may, if present, be selectively overridden to achieve this functionality.

According to the one or more example embodiments, a user may more easily capture a long exposure image.

Also, according to the one or more example embodiments, even a low specification photographing apparatus may capture a long exposure image due to the way in which the present invention forms a long exposure image from a composite set of still images.

The apparatus described herein may include a processor, a memory for storing program data and executing it, a permanent storage unit such as a disk drive, a communication port for handling communications with external devices, and user interface devices, etc. Any processes may be implemented as software modules or algorithms, and may be stored as program instructions or computer readable codes executable by a processor on computer-readable media such as read-only memory (ROM), random-access memory (RAM), CD-ROMs, magnetic tapes, floppy disks, and optical data storage devices. The computer readable recording medium can also be distributed over network coupled computer systems so that the computer readable code is stored and executed in a distributed fashion. This media can be read by the computer, stored in the memory, and executed by the processor.

All references, including publications, patent applications, and patents, cited herein are hereby incorporated by reference to the same extent as if each reference were individually and specifically indicated to be incorporated by reference and were set forth in its entirety herein.

For the purposes of promoting an understanding of the principles of the invention, reference has been made to the exemplary example embodiments illustrated in the drawings, and specific language has been used to describe these example embodiments. However, no limitation of the scope of the invention is intended by this specific language, and the invention should be construed to encompass all example embodiments that would normally occur to one of ordinary skill in the art.

The invention may be described in terms of functional block components and various processing steps. Such functional blocks may be realized by any number of hardware and/or software components configured to perform the specified functions. For example, the invention may employ various integrated circuit components, e.g., memory elements, processing elements, logic elements, look-up tables, and the like, which may carry out a variety of functions under the control of one or more microprocessors or other control devices. Similarly, where the elements of the invention are implemented using software programming or software elements the invention may be implemented with any programming or scripting language such as C, C++, Java, assembler, or the like, with the various algorithms being implemented with any combination of data structures, objects, processes, routines or other programming elements. Functional aspects may be implemented in algorithms that are executed on one or more processors. Furthermore, the invention could employ any number of conventional techniques for electronics configuration, signal processing and/or control, data processing and the like. The words "mechanism" and "element" are used broadly and are not limited to mechanical or physical example embodiments, but can include software routines in conjunction with processors, etc.

The particular implementations shown and described herein are illustrative examples of the invention and are not intended to otherwise limit the scope of the invention in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the invention unless the element is specifically described as "essential" or "critical".

The use of the terms "a" and "an" and "the" and similar referents in the context of describing the invention (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. Numerous modifications and adaptations will be readily apparent to those of ordinary skill in this art without departing from the spirit and scope of the invention.

While the invention has been particularly shown and described with reference to exemplary example embodiments thereof by using specific terms, the example embodiments and terms have merely been used to explain the invention and should not be construed as limiting the scope of the invention as defined by the claims. The exemplary example embodiments should be considered in a descriptive sense only and not for purposes of limitation. Therefore, the scope of the invention is defined not by the detailed description of the invention but by the appended claims, and all differences within the scope will be construed as being included in the invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing example embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1.  A method of controlling a photographing apparatus, the method comprising:

    setting a first exposure time according to a user's input (S602);
    determining a number of times photographing is to be performed according to an illuminance and the first exposure time (S604);
    continuously capturing a plurality of still images for the number of times photographing is determined to be performed (S606); and

generating a resultant image corresponding to the first exposure time by combining the captured plurality of still images (S608).

2. The method of claim 1, further comprising:

capturing each of the plurality of still images for a second exposure time that is less than the first exposure time, the second exposure time being determined by dividing the first exposure time by the number of times photographing is to be performed, and/or
determining the number of times photographing is to be performed according to the illuminance and an iris value.

3. The method of claim 1 or claim 2, further comprising:

reducing brightness values of pixels of the plurality of still images to obtain reduced brightness values, wherein the generating of the resultant image comprises combining the plurality of still images by summing the reduced brightness values.

4. The method of any preceding claim, further comprising:

detecting a movement of the photographing apparatus, wherein the continuous capturing of the plurality of still images is performed only when there is no movement of the photographing apparatus, or when the movement is less than a reference value.

5. The method of any preceding claim, wherein the generating of the resultant image comprises generating the resultant image by generating a combined image whenever each of the plurality of still images is input.

6. The method of any preceding claim, further comprising:

reducing brightness values of pixels of the plurality of still images to obtain reduced brightness values, wherein
the generating of the resultant image comprises combining the plurality of still images having the reduced brightness values, and
the reducing of the brightness values comprises reducing the brightness values of the pixels of the plurality of still images such that contributions of the plurality of still images are the same and brightness values of pixels of the resultant image are not saturated.

7. The method of any preceding, wherein the generating of the resultant image comprises generating the combined image by calculating a brightness value $Y_n(x, y)$ of each pixel of the combined image according to the following equation when an input still image is an $n^{th}$ (where $2 \leq n \leq$ number of times photographing is performed, and n is a natural number) still image,

$$ Y_n(x, y) = \frac{(n-1)}{n} \times Y_{n-1}(x, y) + \frac{1}{n} \times I_n(x, y) $$

where:

$Y_n(x, y)$ is a brightness value of each pixel with (x, y) coordinates of a combined image obtained by combining images from a first still image to an $n^{th}$ still image,
$Y_{n-1}(x, y)$ is a brightness value of each pixel with (x, y) coordinates of a combined image obtained by combining images from the first still image to an $n-1^{th}$ still image, and
$I_n(x, y)$ is a brightness value of each pixel with (x, y) coordinates of the $n^{th}$ still image.

8. A photographing apparatus comprising:

a photographing unit (110) that generates an image by performing photoelectric transformation on incident light;
an exposure time setting unit (210) that sets a first exposure time according to a user's input;

a photographing control unit (220) that determines a number of times photographing is to be performed according to an illuminance and the first exposure time, and controls the photographing unit to continuously capture a plurality of still images for the number of times photographing is determined to be performed; and
an image combining unit (230) that generates a resultant image corresponding to the first exposure time by combining the captured plurality of still images.

9. The photographing apparatus of claim 8, wherein:

each of the plurality of still images is captured for a second exposure time that is less than the first exposure time, the second exposure time being determined by dividing the first exposure time by the number of times photographing is to be performed, and/or
and the number of times photographing is to be performed is determined according to the illuminance and an iris value.

10. The photographing apparatus of claim 8 or claim 9, wherein the image combining unit combines the plurality of still images by reducing brightness values of pixels of the plurality of still images to obtain reduced brightness values and summing the reduced brightness values.

11. The photographing apparatus of any of claims 8 to 10, further comprising:

a movement detecting unit that detects a movement of the photographing apparatus,
wherein the photographing control unit continuously captures the plurality of still images only when there is no movement of the photographing apparatus or when the movement is less than a reference value.

12. The photographing apparatus of any of claims 8 to 11, wherein the image combining unit generates the resultant image by generating a combined image whenever each of the plurality of still images is input.

13. The photographing apparatus of any of claims 8 to 12, wherein:

the image combining unit reduces brightness values of pixels of the plurality of still images to obtain reduced brightness values and combines the plurality of still images having the reduced brightness values, and
the image combining unit reduces the brightness values such that contributions of the plurality of still images in the resultant image are the same and pixel values of pixels of the resultant image are not saturated.

14. The photographing apparatus of any of claims 8 to 13, wherein the image combining unit generates the combined image by calculating a brightness value of each pixel of the combined image according to the following equation when an input still image is an $n^{th}$ ( where $2 \leq n \leq$ number of times photographing is to be performed, and n is a natural number) still image,

$$Y_n(x, y) = \frac{(n-1)}{n} \times Y_{n-1}(x, y) + \frac{1}{n} \times I_n(x, y)$$

where
$Y_n(x, y)$ is a brightness value of each pixel with (x, y) coordinates of a combined image obtained by combining images from a first still image to an $n^{th}$ still image,
$Y_{n-1}(x, y)$ is a brightness value of each pixel with (x, y) coordinates of a combined image obtained by combining images from the first still image to an $n-1^{th}$ still image, and
$I_n(x, y)$ is a brightness value of each pixel with (x, y) coordinates of the $n^{th}$ still image.

15. A non-transitory computer-readable recording medium having embodied thereon computer program code for executing a method of controlling a photographing apparatus when being read and performed, the method comprising:

setting a first exposure time according to a user's input (S602);
determining a number of times photographing is to be performed according to an illuminance and the first exposure time (S604);

continuously capturing a plurality of still images for the number of times photographing is determined to be performed (S606); and
generating a resultant image corresponding to the first exposure time by combining the captured plurality of still images (S608).

# FIG. 1

EP 2 704 424 A1

# FIG. 2

170a

210
EXPOSURE TIME
SETTING UNIT

220
PHOTOGRAPHING
CONTROL UNIT

110
PHOTOGRAPHING
UNIT

230
IMAGE
COMBINING UNIT

# FIG. 3

FIRST EXPOSURE TIME

SECOND
EXPOSURE TIME

SECOND
EXPOSURE TIME

SECOND
EXPOSURE TIME

SECOND
EXPOSURE TIME

$I_1$ + $I_2$ + $I_3$ + $I_4$

$I_{out}$

# FIG. 4

I₁ I₂ I₃

I out

# FIG. 5

I out1 I out2

# FIG. 6

```
        ┌─────────┐
        │  START  │
        └─────────┘
             │
             ▼
┌───────────────────────────────┐
│    SET FIRST EXPOSURE TIME     │── S602
└───────────────────────────────┘
             │
             ▼
┌───────────────────────────────┐
│     DETERMINE NUMBER OF TIMES  │── S604
│    PHOTOGRAPHING IS PERFORMED  │
└───────────────────────────────┘
             │
             ▼
┌───────────────────────────────┐
│  CAPTURE PLURALITY OF STILL IMAGES │── S606
└───────────────────────────────┘
             │
             ▼
┌───────────────────────────────┐
│    GENERATE RESULTANT IMAGE BY │── S608
│ COMBINING PLURALITY OF STILL IMAGES │
└───────────────────────────────┘
             │
             ▼
        ┌─────────┐
        │   END   │
        └─────────┘
```

# FIG. 7

START

DETERMINE FIRST
EXPOSURE TIME — S702

DETERMINE NUMBER N OF
TIMES PHOTOGRAPHING IS
PERFORMED — S704

$n=1$ — S706

CAPTURE STILL IMAGE $I_1$ — S708

$n=n+1$ — S710

CAPTURE STILL IMAGE $I_n$ — S712

$$Y_n(x, y) = \frac{(n-1)}{n} \times Y_{n-1}(x, y) + \frac{1}{n} \times I_n(x, y)$$ — S714

NO — $n=N?$ — S716

YES

$I_{out}(x, y) = Y_n(x, y)$ — S718

END

## FIG. 8

# FIG. 9

START

↓

SET FIRST EXPOSURE TIME — S902

↓

DETERMINE NUMBER OF TIMES PHOTOGRAPHING IS PERFORMED — S904

↓

DETECT MOVEMENT — S906

↓

DETERMINE WHETHER MOVEMENT IS EQUAL TO OR GREATER THAN REFERENCE VALUE — S908

YES →

NO ↓

CAPTURE PLURALITY OF STILL IMAGES — S910

↓

GENERATE RESULTANT IMAGE BY COMBINING PLURALITY OF STILL IMAGES — S912

↓

END

FIG. 10

Europäisches
Patentamt

European
Patent Office

Office européen
des brevets

# EUROPEAN SEARCH REPORT

Application Number

EP 13 17 0347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 778 210 B1 (SUGAHARA TAKURO [JP] ET AL) 17 August 2004 (2004-08-17) | 1,2,8,9, 15 | INV. H04N5/235 |
| Y | * abstract * * column 4, line 46 - column 11, line 24 * * figures 1-2 * | 4,11 | H04N1/21 H04N1/387 |
| X | US 2007/035630 A1 (LINDENSTRUTH VOLKER [DE] ET AL) 15 February 2007 (2007-02-15) * abstract * * paragraphs [0006] - [0009], [0017], [0033] * * figures 1-3 * | 1-3, 5-10, 12-15 | |
| X | EP 0 102 030 A2 (OLYMPUS OPTICAL CO [JP]) 7 March 1984 (1984-03-07) * abstract * * paragraphs [0006], [0015], [0028] - [0031] * * figures 1-14 * | 1,2,8,9, 15 | |
| Y | EP 1 689 170 A2 (SAMSUNG ELECTRONICS CO LTD [KR]) 9 August 2006 (2006-08-09) * abstract * * paragraphs [0005] - [0022], [0041] * * figures 1-9 * | 4,11 | TECHNICAL FIELDS SEARCHED (IPC) H04N |
| A | US 2007/229699 A1 (HAMAMURA TOSHIHIRO [JP] ET AL) 4 October 2007 (2007-10-04) * abstract * * paragraphs [0013] - [0018] * * figures 1-7 * | 1-15 | |
| A | US 2010/053346 A1 (MITSUNAGA TOMOO [JP]) 4 March 2010 (2010-03-04) * abstract * * paragraphs [0008] - [0028] * * figures 1-37 * | 1-15 | |

-/--

The present search report has been drawn up for all claims

| Place of search | Date of completion of the search | Examiner |
|---|---|---|
| Munich | 11 December 2013 | Horstmannshoff, Jens |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 17 0347

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/045510 A1 (ODAKA YUKIO [JP]) 2 March 2006 (2006-03-02) * abstract * * paragraphs [0024] - [0028] * * figures 1-11 * ----- | 1-15 | |
| A | EP 2 387 229 A2 (CASIO COMPUTER CO LTD [JP]) 16 November 2011 (2011-11-16) * abstract * * paragraphs [0007] - [0016] * * figures 1-9 * ----- | 1-15 | |

TECHNICAL FIELDS
SEARCHED        (IPC)

The present search report has been drawn up for all claims

| Place of search | Date of completion of the search | Examiner |
|---|---|---|
| Munich | 11 December 2013 | Horstmannshoff, Jens |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 13 17 0347

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2013

| Patent document cited in search report | | Publication date | Patent family member(s) | | Publication date |
|---|---|---|---|---|---|
| US 6778210 | B1 | 17-08-2004 | NONE | | |
| US 2007035630 | A1 | 15-02-2007 | NONE | | |
| EP 0102030 | A2 | 07-03-1984 | DE | 3381463 D1 | 17-05-1990 |
| | | | EP | 0102030 A2 | 07-03-1984 |
| | | | JP | S5934772 A | 25-02-1984 |
| | | | US | 4614966 A | 30-09-1986 |
| EP 1689170 | A2 | 09-08-2006 | CN | 1815297 A | 09-08-2006 |
| | | | EP | 1689170 A2 | 09-08-2006 |
| | | | JP | 2006215571 A | 17-08-2006 |
| | | | JP | 2011083003 A | 21-04-2011 |
| | | | KR | 20060090029 A | 10-08-2006 |
| | | | US | 2006177207 A1 | 10-08-2006 |
| US 2007229699 | A1 | 04-10-2007 | CN | 101090459 A | 19-12-2007 |
| | | | JP | 4979969 B2 | 18-07-2012 |
| | | | JP | 2007281548 A | 25-10-2007 |
| | | | KR | 20070099394 A | 09-10-2007 |
| | | | US | 2007229699 A1 | 04-10-2007 |
| US 2010053346 | A1 | 04-03-2010 | CN | 101668125 A | 10-03-2010 |
| | | | JP | 4661922 B2 | 30-03-2011 |
| | | | JP | 2010062785 A | 18-03-2010 |
| | | | US | 2010053346 A1 | 04-03-2010 |
| US 2006045510 | A1 | 02-03-2006 | JP | 4350616 B2 | 21-10-2009 |
| | | | JP | 2006066996 A | 09-03-2006 |
| | | | US | 2006045510 A1 | 02-03-2006 |
| | | | US | 2008284874 A1 | 20-11-2008 |
| EP 2387229 | A2 | 16-11-2011 | CN | 102244730 A | 16-11-2011 |
| | | | EP | 2387229 A2 | 16-11-2011 |
| | | | KR | 20110126053 A | 22-11-2011 |
| | | | US | 2011279693 A1 | 17-11-2011 |

EPO FORM P0459

For more details about this annex : see Official Journal of the European Patent Office, No. 12/82

**EP 2 704 424 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120093891